# FASCICULE DE BREVET EUROPEEN

(11) **EP 1 913 357 B1**
(45) Date de publication et mention de la délivrance du brevet: **02.09.2015**
(21) Numéro de dépôt: 06794195.5
(22) Date de dépôt: 21.07.2006
(51) Int. Cl.: G01M 13/02, G01M 5/00, G01N 3/00

(54) **DISPOSITIF D'ESSAIS D'UNE STRUCTURE DE FUSELAGE A COURBURE LONGITUDINALE ET CIRCONFERENTIELLE**
EINRICHTUNG ZUM PRÜFEN EINER RUMPFSTRUKTUR MIT LONGITUDINAL- UND UMFANGSKRÜMMUNG
DEVICE FOR TESTING A FUSELAGE STRUCTURE WITH LONGITUDINAL AND CIRCUMFERENTIAL CURVATURE

(30) Priorité: 26.07.2005 FR 0507957
(43) Date de publication de la demande: 23.04.2008
(73) Titulaire: Airbus Operations, 31060 Toulouse (FR)
(72) Inventeur: SAVES-SAINT-GERMES, Cyrille, F-31600 Seysses (FR); MIGNON, Oliver, F-33140 Villenave d'Ornon (FR); DECRAECKER, Patrick, F-33460 Arsac (FR); LANVERS, Benoît, F-33320 Eysines (FR)
(74) Mandataire: Santarelli
(86) Numéro de dépôt international: PCT/FR2006/001790
(87) Numéro de publication internationale: WO 2007/012735

(56) Documents cités:
- CH-A- 254 842
- DE-C- 717 836
- DE-U1- 29 711 362
- SU-A- 697 870

## Description

La présente invention concerne un dispositif d'essais associé à une structure de fuselage à double courbure.

Plus particulièrement, la présente invention vise à fournir un dispositif d'essais permettant de tester en statique, fatigue et tolérance aux dommages des structures de fuselage à double courbure, c'est-à-dire à courbure longitudinale et circonférentielle.

En pratique, ces structures de fuselage sont des couronnes de fuselage typiquement utilisées pour réaliser le fuselage arrière ou avant d'un avion.

Il est connu d'utiliser de tel dispositif d'essais pour appliquer sur la structure de fuselage au moyen d'un système d'application de forces, des efforts représentatifs des efforts subis par la structure de fuselage lors de son utilisation. Ces efforts sont typiquement des forces de traction ou de compression exercées dans la direction longitudinale de la structure, des forces de torsion selon la circonférence de la structure et des forces de pression liées à la différence de pression existant entre l'intérieur et l'extérieur de l'avion.

On connaît ainsi un dispositif d'essais permettant d'appliquer des forces de pression et un chargement mécanique axial sur une structure à simple courbure, du type d'une couronne cylindrique, tel que décrit dans le document "Development of a test fixture for fuselage curved panels", de M. Langon et C. Meyer, CEAT, ICAF 1999, pages 745 à 753.

Toutefois, un tel dispositif d'essais ne peut s'appliquer à une structure de fuselage à double courbure tout en restant représentatif des efforts réels subis par la structure de fuselage d'avion.

Par ailleurs, on connaît un dispositif d'essai dans le document SU 697 870 appliqué à une structure cylindrique, qui comporte un axe central déformable en traction et en torsion pour transmettre des efforts à la structure cylindrique.

La présente invention propose un dispositif d'essais d'une couronne de fuselage à double courbure selon la revendication 1.

Ainsi, le dispositif d'essais conforme à l'invention comporte un arbre central permettant de réaliser une structure rigide au centre de la couronne de fuselage et de reprendre les efforts appliqués sur la couronne de fuselage.

Grâce à la reprise des efforts au centre de la couronne de fuselage, l'espace extérieur à la couronne de fuselage est libre, permettant une inspection en permanence de la couronne de fuselage soumise à des contraintes.

Selon un mode de réalisation de l'invention, le dispositif d'essais comprend des moyens de solidarisation solidarisant l'arbre central rigide à une extrémité supérieure de la couronne de fuselage, les moyens d'application de forces exerçant des forces sur une extrémité inférieure de la couronne de fuselage.

Cette disposition permet de soumettre l'intégralité de la couronne de fuselage à des contraintes de torsion ou traction/compression. L'arbre central rigide permet de reprendre les efforts appliqués sur la couronne de fuselage entre ses extrémités inférieure et supérieure.

Selon un mode de réalisation de l'invention, les moyens de support comportent une plaque de base supportant des moyens d'application de forces de torsion et une embase fixée à l'arbre central rigide et supportant des moyens d'application de forces de traction ou de compression.

Ainsi, il est possible de découpler l'application de deux types de force de telle sorte que les forces appliquées peuvent être modifiées lors des essais indépendamment l'une de l'autre et l'analyse des résultats sur la structure peut être faite de manière décorrélée pour les différents types de force appliqués.

De préférence, les moyens d'application de forces de torsion sont adaptés à appliquer une force tangentielle à la surface courbe de la couronne de fuselage.

Les forces ainsi appliquées peuvent demeurer colinéaires à la surface, et accompagner la déformation de cette surface.

En pratique, les moyens d'application de forces de torsion comporte au moins un vérin adapté à appliquer un effort suivant un axe horizontal et monté à pivotement à ses extrémités autour d'un axe vertical.

Grâce à ce montage en pivotement des extrémités du vérin, l'effort de torsion appliqué sur la surface de la structure fuselée peut conserver en permanence une direction tangentielle à cette surface, même après déplacement et déformation de celle-ci. En pratique, pour appliquer de manière régulière les forces sur la structure de fuselage, les moyens d'application de forces sont solidaires au point d'application de ladite force d'un anneau de transfert de charge, l'extrémité inférieure de la couronne de fuselage étant fixée à cet anneau de transfert de charge.

D'autres particularités et avantages de l'invention apparaîtront encore dans la description ci-après.

Aux dessins annexés, donnés à titre d'exemples non limitatifs :
- la figure 1 est une vue en perspective d'une structure de fuselage à double courbure ;
- la figure 2 illustre schématiquement un dispositif d'essais en perspective conforme à un mode de réalisation de l'invention ;
- la figure 3 est une vue en section longitudinale du dispositif de la figure 2 ;
- la figure 4 est une vue en perspective du support d'arbre central du dispositif de la figure 2 ;
- les figures 5a et 5b sont respectivement une vue en perspective et une vue de dessus d'un anneau de transfert de charge du dispositif d'essais de la figure 2 ;
- les figures 6a et 6b sont respectivement une vue en perspective et une vue en coupe d'une embase du dispositif d'essais de la figure 2 ;
- la figure 7 est une vue en perspective du noyau de l'arbre central du dispositif de la figure 2 ;
- la figure 8 est une vue en perspective d'un couvercle de solidarisation du dispositif de la figure 2 ;
- les figures 9a et 9b sont respectivement des vues en perspective et en coupe d'un anneau extérieur de fixation du dispositif de la figure 2 ;
- les figures 10a et 10b sont respectivement des vues en perspective et en coupe d'un anneau intérieur de fixation adapté à coopérer avec l'anneau extérieur de fixation des figures 9a et 9b ;
- la figure 11 est une vue de dessus, sans le noyau de l'arbre central et la structure de fuselage, illustrant le montage des moyens d'application de forces ; et
- la figure 12 est une vue en section longitudinale partielle du dispositif d'essais de la figure 2 illustrant le montage des moyens d'application de forces.

On va décrire à présent en référence aux figures un exemple de réalisation d'un dispositif d'essais d'une structure de fuselage.

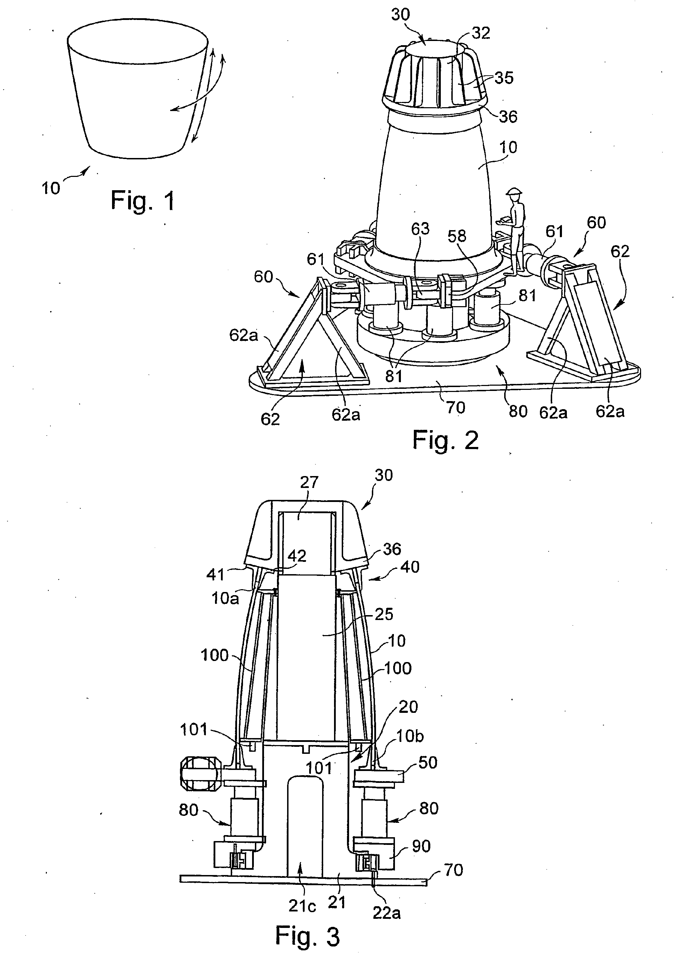

Le dispositif d'essais qui va être décrit ci-après permet de tester une structure 10 à double courbure telle qu'illustrée à la figure 1.

Il s'agit par exemple d'une couronne de fuselage présentant, comme illustré par les flèches sur la figure 1, à la fois une courbure longitudinale et une courbure circonférentielle.

Le dispositif d'essais permet de tester en statique, fatigue et tolérance aux dommages une telle structure.

De manière générale, il permet d'appliquer des efforts représentatifs de ceux subis par une structure d'avion, et notamment des forces de traction ou de compression dans la direction longitudinale, des forces de torsion par rapport à l'axe longitudinal ou encore des forces de pression dues à la différence de pression entre l'intérieur de la structure et l'extérieur.

Bien entendu, il est nécessaire de pouvoir combiner l'ensemble de ces types de force à exercer sur la structure.

On a illustré de manière générale sur les figures 2 et 3 un dispositif d'essais conforme à un mode de réalisation de l'invention.

Actuellement, le comportement d'une structure de fuselage à double courbure est appréhendé à l'aide d'essais et simulations numériques sur des structures à simple courbure.

Des données de test sont ainsi nécessaires pour valider et calibrer les modèles numériques utilisés pour les configurations à double courbure afin d'appréhender leur comportement.

Le dispositif d'essais tel que décrit ci après permet en outre d'évaluer et d'étudier le comportement de nouveaux matériaux (métalliques et composites) ainsi que d'étudier de nouvelles technologies.

Dans son principe, le dispositif d'essais comprend un arbre central 20 s'étendant dans la direction longitudinale et au centre de la structure de fuselage 10.

L'arbre central 20 comporte un socle 21 destiné à être fixé au sol et un barreau vertical 25.

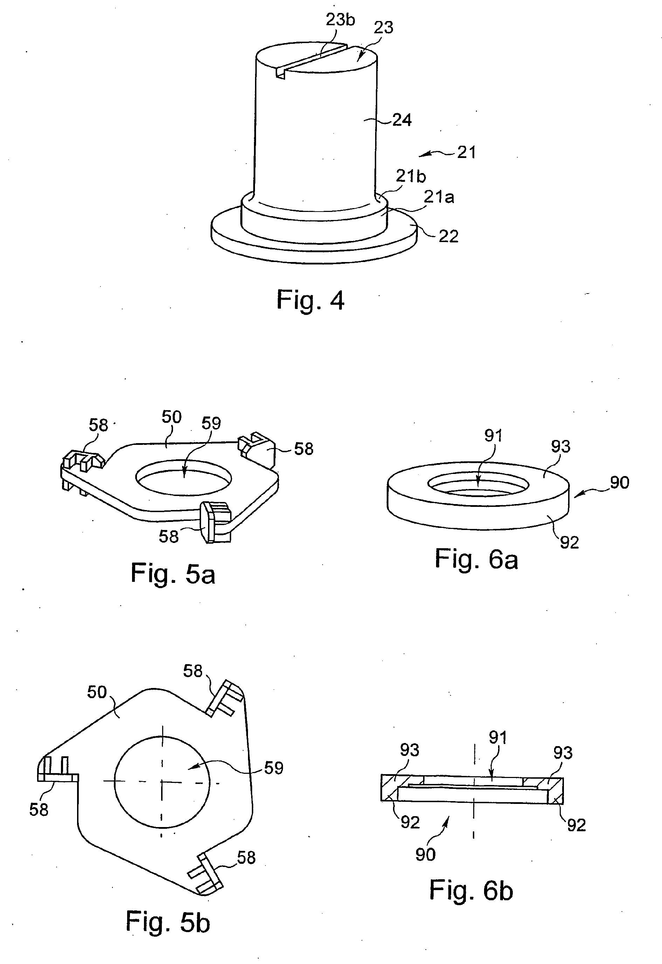

Le socle 21 est illustré notamment à la figure 4. Il comporte une portion formant pied 22 destinée à être fixée par une série de vis 22a comme illustré sur la figure 3 à une plaque de base 70 qui sera décrite ultérieurement.

Le socle 21 est de forme extérieure globalement cylindrique et comporte une couronne 21 a formant un épaulement 21 b avec le fût cylindrique 24 du socle 21. Le montage de moyens d'application de forces sur l'épaulement 21 b sera décrit ultérieurement.

Un évidement cylindrique central 21 c permet d'alléger le socle 21.

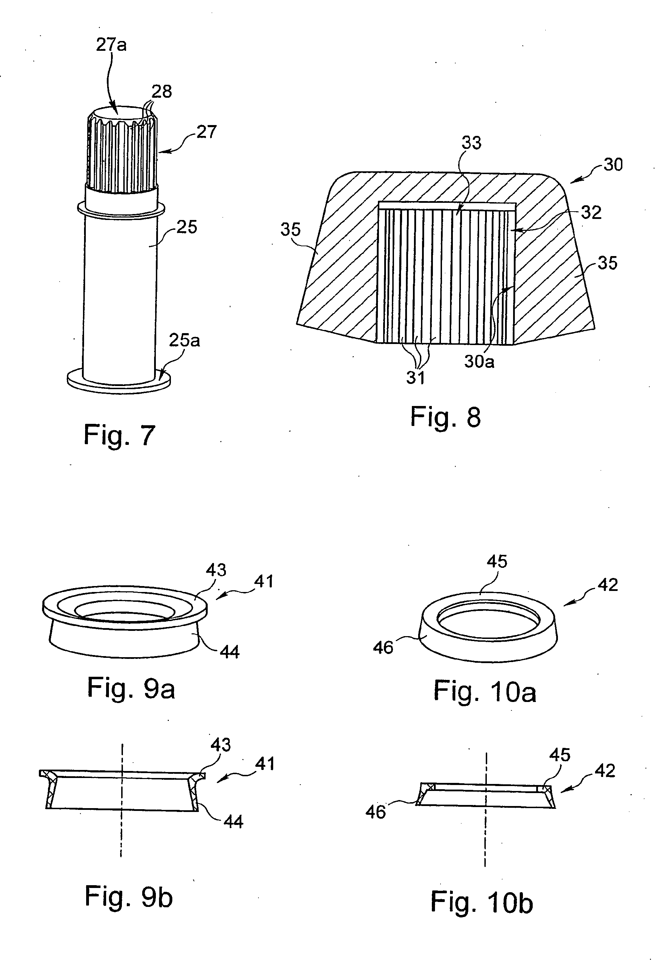

Sur une face d'extrémité 23 en forme de disque, opposée au pied 22 du socle 21, sont prévus des moyens de solidarisation du socle 21 à un barreau vertical 25. Dans ce mode de réalisation, le socle comporte une rainure 23b s'étendant selon un diamètre de la face d'extrémité 23 en forme de disque. Cette rainure 23b est adaptée à coopérer avec une nervure complémentaire (non représentée) prévue à une face d'extrémité 25a du barreau vertical 25 telle qu'illustrée à la figure 7.

Bien entendu, des moyens inversés de solidarisation pourraient être prévus entre le socle 21 et le barreau 25, ou encore d'autres types de moyens de solidarisation, procurant à la structure de l'arbre central 20 une rigidité apte à supporter les efforts appliqués à la structure de fuselage 10.

A titre d'exemple, le barreau vertical présente un diamètre de 1 m et une hauteur d'environ 4 m. Bien entendu, la hauteur du barreau vertical peut être modifiée en fonction de la longueur de la structure de fuselage 10 à tester.

Le socle 21 et le barreau vertical 25 sont par exemple des structures en acier moulées et usinées, adaptées à supporter et à reprendre les efforts appliqués sur la structure de fuselage.

Le barreau vertical 25 comporte à une extrémité 27 des moyens de solidarisation 30, 40 adaptés à solidariser l'arbre central 20 à une extrémité supérieure 10a de la structure de fuselage 10.

Comme bien illustré à la figure 8, les moyens de solidarisation comporte un couvercle 30 solidaire de l'extrémité supérieure 27 de l'arbre central 20.

Les fixations de ce couvercle 30 à l'arbre central 20 doivent être suffisamment robustes pour résister aux forces de torsion et de traction ou compression exercées sur la structure 10, et permettre ainsi la reprise par l'arbre central 20 des efforts auxquels est soumise la structure.

Pour cela, dans ce mode de réalisation, l'extrémité supérieure 27 du barreau vertical 25 de l'arbre central 20 comprend une série de cannelures 28 s'étendant parallèlement à l'axe de l'arbre central 20 et s'encastrant dans une série de cannelures complémentaires 31 réalisée sur une face interne 30a du couvercle 30.

En pratique, ce couvercle 30 comporte un fût cylindrique 32 avec un alésage interne 33 de forme globalement cylindrique dont la surface interne cylindrique 30a est pourvue des cannelures complémentaires 31.

Ces cannelures sont particulièrement bien adaptées pour reprendre les efforts de torsion du couvercle 30 sur l'extrémité 27 du barreau vertical 25.

Afin de solidariser en traction/compression l'arbre central 20 au couvercle 30, une série de vis de fixation est prévue entre le fond du couvercle 30 et l'extrémité terminale 27a de l'extrémité 27 du barreau vertical 25.

Le couvercle 30 comporte également à l'extérieur une série d'ailettes 35 disposée entre le fût cylindrique 32 du couvercle 30 et une collerette 36. Ces ailettes 35 permettent de renforcer la structure du couvercle 30.

Compte tenu des forces en présence et des nombreux moyens de fixation destinés à solidariser le couvercle 30 au barreau vertical 25, il est important que l'arbre central soit réalisé en un matériau plein.

Sur la face inférieure de la collerette 36 du couvercle 30, des moyens de fixation 40 sont prévus pour réaliser la fixation de l'extrémité supérieure 10a de la structure de fuselage 10.

Comme bien illustré sur les figures 9a, 9b, 10a , 10b, ces moyens de fixation 40 sont constitués d'un anneau extérieur 41 et d'un anneau intérieur 42 adaptés à maintenir par serrage l'extrémité supérieure 10a de la structure de fuselage 10 (voir notamment figure 3).

Plus précisément, ces anneaux de fixation 41, 42 ont une forme globalement cylindrique. L'anneau de fixation extérieure 41 comporte ainsi une collerette 43 destinée à venir en contact avec la collerette 36 du couvercle pour être fixée par une série de vis de fixation à celle-ci. Cette collerette 43 est prolongée d'une portion tronconique 44 destinée à épouser la surface extérieure de l'extrémité supérieure 10a de la structure de fuselage 10.

De même, l'anneau intérieur de fixation 42 comporte une collerette 45 destinée à être fixée, par exemple aux moyens de vis de fixation, à la collerette 36 du couvercle 30. Cette collerette 45 est prolongée par une portion tronconique 46 destinée à épouser la face intérieure de l'extrémité supérieure 10a de la structure de fuselage 10.

Ainsi, lorsque les anneaux de fixation 41, 42 sont fixés au couvercle 30, l'anneau de fixation intérieur 42 s'étendant à l'intérieur de la portion tronconique 44 de l'anneau de fixation extérieur 41, les portions tronconiques 44, 46 des anneaux sont adaptées à pincer l'extrémité supérieure 10a de la structure de fuselage.

A l'extrémité inférieure 10b de la structure de fuselage, un montage identique est réalisé grâce à des moyens de fixation solidaires d'un anneau de transfert de charge 50.

Comme pour les moyens de fixation supérieurs 40, l'extrémité inférieure 10b de la structure de fuselage 10 est adaptée à être maintenue par serrage entre deux anneaux complémentaires 41, 42 définissant entre deux couronnes cylindriques un espace de maintien de l'extrémité 10b de la structure de fuselage 10.

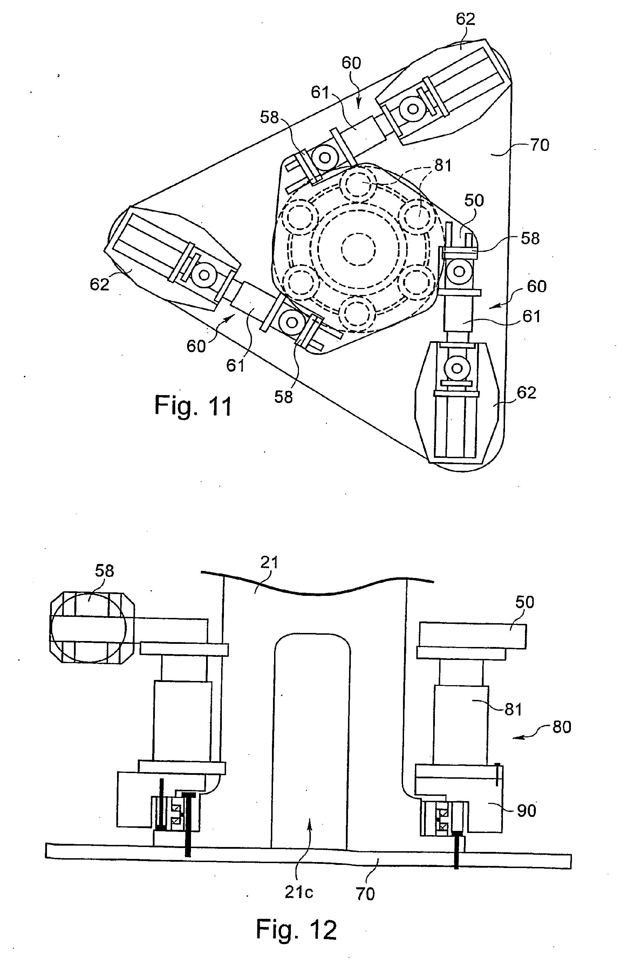

On va décrire à présent notamment en référence aux figures 11 et 12 l'ensemble des moyens d'application de forces 60, 80. Ces moyens d'application de forces 60, 80 sont montés sur des moyens de support solidaires de l'arbre central 20.

Comme indiqué précédemment, ces moyens de support comportent une plaque de base 70, bien illustrée à la figure 2, de forme triangulaire dans ce mode de réalisation.

Cette plaque de base 70 est adaptée à supporter des moyens d'application de forces d'un premier type 60, et ici des moyens d'application de forces adaptés à appliquer une force de torsion à la structure de fuselage 10.

Par ailleurs, les moyens de support comportent une embase 90 fixée à l'arbre central 20, et dans ce mode de réalisation, au socle 21. L'embase 90 est adaptée à supporter des moyens d'application de forces 80 d'un second type, et ici des moyens d'application de force 80 adaptés à appliquer une force de traction ou de compression à la structure de fuselage 10.

En pratique, dans ce mode de réalisation, il est prévu trois vérins 61 adaptés à appliquer une force de torsion. Ces vérins sont montés sur des organes de support 62 disposés à 120° les uns des autres, et ainsi fixés aux sommets de la plaque de base triangulaire 70. Ces vérins sont par exemple des vérins hydrauliques adaptés à exercer une force selon leur tige de piston.

Afin d'assurer une fixation robuste des vérins 61 à la plaque de base 70, les organes de support 62 comportent deux montants 62a inclinés, avec un angle compris entre 45° et 80°, par rapport à la plaque de base 70. Les montants 62a forment entre eux un angle compris entre 60° et 90°.

De manière complémentaire, l'anneau de transfert de charge 50 sur lequel est fixée la structure de fuselage 10 présente, comme bien illustré sur les figures 5a et 5b, trois patins de fixation 58 également disposés à 120°.

L'anneau de transfert de charge 50 a une forme plane et globalement triangulaire, les patins 58 étant disposés aux sommets de la forme triangulaire. Il comporte en outre en son centre une ouverture circulaire 59 adaptée au passage de l'arbre central 20, et en particulier adaptée au passage du fût cylindrique 24 du socle 21.

Chaque vérin hydraulique 61 est disposé horizontalement entre un organe de support 62 et un patin de fixation 58. L'extrémité de la tige de chaque vérin 61 est rendue solidaire, par exemple aux moyens de vis et d'une chape, d'un patin de fixation 58.

Un montage similaire de l'autre extrémité de chaque vérin 61 permet de rendre solidaire ce vérin d'un organe de support 62. Grâce à ce montage par l'intermédiaire de chapes, les extrémités du vérin sont montées à pivotement autour respectivement de deux axes verticaux, au niveau de leur montage sur l'organe de support 62 et le patin de fixation 58.

Ainsi, le déplacement en rotation de l'anneau de transfert de charge 50, sous l'effort appliqué par chaque vérin hydraulique 61, s'accompagne en réaction d'un pivotement du vérin 61 de telle sorte que celui-ci conserve une direction d'action tangente à la surface de la structure de fuselage.

La force exercée par chaque vérin hydraulique est ici exercée dans un plan horizontal, confondu avec le plan dans lequel s'étend l'anneau de transfert de charge 50. La force ainsi appliquée est tangente à la surface de la structure de fuselage et correspond à une force de torsion appliquée en trois points équidistants de l'anneau de transfert de charge. Elle est ainsi uniformément appliquée à l'anneau de transfert de charge 50.

Parallèlement à ces moyens permettant d'exercer une force de torsion sur la structure de fuselage, six vérins hydrauliques 81 disposés verticalement entre l'anneau de transfert de charge 50 et l'embase 90 sont également prévus.

Comme bien illustré sur les figures 6a et 6b, l'embase 90 a une forme globalement d'anneau circulaire présentant en son centre une ouverture circulaire 91 adaptée au passage de l'arbre central 20, et plus précisément au fût cylindrique 24 du socle 21.

Cet embase 90 comporte une aile cylindrique 92 et une collerette annulaire 93.

Comme bien illustré à la figure 3, l'embase 90 repose au niveau de sa collerette annulaire 93 sur l'épaulement 21b du socle 21, l'aile cylindrique 92 définissant ainsi avec la couronne 21 a et le pied 22 du socle 21 un logement adapté à loger des paliers pour permettre le montage de l'embase 90 sur le socle 21.

Sur la collerette annulaire 93 de l'embase 90 sont montés, uniformément répartis autour de l'axe vertical de l'arbre central 20, six vérins hydrauliques 81 d'axe vertical.

Ainsi, les vérins hydrauliques 81 sont disposés à 60° les uns des autres sur l'embase circulaire 90.

Comme bien illustré à la figure 12, les vérins hydrauliques 81 ont leur extrémité de tige fixée à l'anneau de transfert de charge 50 supportant la structure de fuselage 10.

Les vérins verticaux 81 sont ainsi disposés entre l'embase 90 et l'anneau de transfert de charge 50 de telle sorte qu'une force verticale de traction ou de compression est exercée au travers de l'anneau de transfert de charge 80 sur la structure de fuselage 10 fixée en son extrémité inférieure 10b à l'anneau de transfert de charge 50. La force appliquée est ainsi uniformément répartie sur l'extrémité inférieure 10b de la structure 10.

Grâce à ce montage des vérins hydrauliques horizontaux 61 sur la plaque de support triangulaire 70 d'une part, et des vérins verticaux 81 sur l'embase 90, il est possible de décoréler l'application des forces de traction/compression et de torsion.

Par ailleurs, afin de pouvoir recréer et tester un différentiel de pression existant entre l'intérieur et l'extérieur de la structure de fuselage 10, des moyens de mise en pression 100 sont disposés entre l'arbre central 20 et la structure de fuselage 10.

Dans ce mode de réalisation, les moyens de mise en pression 100 sont constitués d'une structure tronconique 100 située entre le barreau vertical 25 et la structure de fuselage 10, l'espace entre cette structure tronconique 100 et la structure de fuselage 10 peut être pressurisé par l'envoi d'air sous pression ou encore par l'intermédiaire d'un ballon gonflable rempli d'eau.

A cet effet, des entrées du fluide pressurisée 101 sont prévues, de préférence en partie inférieure de la structure tronconique 100.

La structure tronconique 100 forme ainsi un caisson permettant de restreindre l'espace entre l'arbre central 20 et la structure de fuselage.

Grâce aux différents moyens d'application de forces, il est possible d'appliquer sur la structure tous les efforts mécaniques représentatifs d'un comportement réel de la structure de fuselage.

En particulier, il est possible d'appliquer les efforts maximums suivants :

| | Essai statique | Essai fatigue |
|---|---|---|
| 1 : Pression + traction | Fₘₐₓ = 17 000 kN | Fₘₐₓ = 10 000 kN |
| 2 : Pression + compression | ΔPₘₐₓ = 3.7 bar | ΔPₘₐₓ = 1.9 bar |
| 3 : Pression + torsion | Mₘₐₓ = 7 300 kN | Mₘₐₓ = 4 300 kN |
| | ΔPₘₐₓ = 3.7 bar | ΔPₘₐₓ = 1.9 bar |
| 4 : Pression + torsion + compression | Fₘₐₓ = 17 000 kN | Fₘₐₓ = 17 000 kN |
| | Mₘₐₓ = 7 300 kN | Mₘₐₓ = 4 300 kN |
| | ΔPₘₐₓ = 3.7 bar | ΔPₘₐₓ = 1.9 bar |

On notera en outre que par la conception du dispositif telle que décrite précédemment, l'espace extérieur à la structure de fuselage 10 reste disponible comme illustré à la figure 2, permettant une inspection de la structure de fuselage par l'extérieur.

Si la fixation de la structure de fuselage est réalisée par clampage de la structure, il est possible d'effectuer le démontage de celle-ci aisément, et d'inspecter également l'intérieur de la structure après l'application des efforts.

Grâce à la structure modulaire de l'arbre central, constitué du socle et du barreau vertical, il est possible, notamment en changeant le barreau vertical, de s'adapter à différentes structures fuselées de hauteur variable.

On notera en outre que le démontage de la structure en cours de test peut également être évité en utilisant de manière classique des méthodes d'inspection non destructives et en utilisant des capteurs placés préalablement en différents points de la structure de fuselage.

Cette structure de test permet d'étudier la tolérance en dommage, fatigue et statique d'une structure à double courbure. En particulier, il est possible de mesurer les contraintes appliquées à la structure 10, enregistrées grâce à des jauges de contrainte, et d'observer tous les déplacements dans la structure de fuselage, dans toutes les directions de l'espace.

Bien entendu, la présente invention n'est pas limitée aux exemples de réalisation tels que décrits précédemment.

En particulier, le nombre de vérins hydrauliques utilisés tant pour appliquer une force de torsion que pour appliquer une force de compression ou traction, n'est nullement limitatif. En outre, des moyens d'application de forces autres que des vérins hydrauliques pourraient être utilisés.

Par ailleurs, d'autres types de fixation de la structure de fuselage à ses extrémités pourraient être mis en oeuvre que ceux décrits précédemment par clampage.

## Revendications

1. Dispositif d'essais associé à une couronne de fuselage (10) à courbure longitudinale et circonférentielle, comprenant des moyens d'application de forces (60, 80) sur ladite couronne de fuselage, **caractérisé en ce qu'**il comprend un arbre central rigide (20) s'étendant dans la direction longitudinale et au centre de ladite couronne de fuselage (10), et des moyens de solidarisation adaptés pour solidariser ledit arbre central rigide à ladite couronne de fuselage (10) et à des moyens de support (70, 90), et **en ce que** les moyens d'application de forces (60, 80) sur la couronne de fuselage sont montés sur lesdits moyens de support (70, 90).

2. Dispositif d'essais conforme à la revendication 1, **caractérisé en ce qu'**il comprend des moyens de solidarisation (30, 40) solidarisant ledit arbre central rigide à une extrémité supérieure (10a) de la couronne de fuselage (10), les moyens d'application de forces (60, 80) exerçant des forces sur une extrémité inférieure (10b) de la couronne de fuselage.

3. Dispositif d'essais conforme à l'une des revendications 1 ou 2, **caractérisé en ce que** lesdits moyens de support comportent une plaque de base (70) supportant des moyens d'application de forces de torsion (60) et une embase (90) fixée audit arbre central rigide (20) et supportant des moyens d'application de forces de traction ou de compression (80).

4. Dispositif d'essais conforme à la revendication 3, **caractérisé en ce que** lesdits moyens d'application de forces de torsion sont adaptés à appliquer une force tangentielle à la surface courbe de ladite couronne de fuselage.

5. Dispositif d'essais conforme à la revendication 4, **caractérisé en ce que** lesdits moyens d'application de forces de torsion comportent au moins un vérin adapté à appliquer un effort suivant un axe horizontal et monté à pivotement à ses extrémités autour d'un axe vertical.

6. Dispositif d'essais conforme à la revendication 2, **caractérisé en ce que** les moyens d'application de forces (60, 80) sont solidaires au point d'application de ladite force d'un anneau de transfert de charge (50), ladite extrémité inférieure (10b) de la couronne de fuselage (10) étant fixée audit anneau de transfert de charge (50).

7. Dispositif d'essais conforme à l'une des revendications 2 ou 6, **caractérisé en ce que** lesdits moyens de solidarisation comportent un couvercle (30) solidaire d'une extrémité supérieure (27) de l'arbre central rigide (20) et comprenant des moyens de fixation (40) de l'extrémité supérieure (10a) de la couronne de fuselage (10).

8. Dispositif d'essais conforme à la revendication 7, **caractérisé en ce que** lesdits moyens de fixation (40) sont constitués d'un anneau extérieur (41) et d'un anneau intérieur (42) adaptés à maintenir par serrage l'extrémité supérieure (10a) de la couronne de fuselage (10).

9. Dispositif d'essais conforme à l'une des revendications 7 ou 8, **caractérisé en ce que** l'extrémité supérieure (27) de l'arbre central rigide (20) comprend une série de cannelures (28) s'étendant parallèlement à l'axe de l'arbre central rigide (20) et s'encastrant dans une série de cannelures complémentaires (31) ménagées dans une face interne (30a) dudit couvercle (30).

## Patentansprüche

1. Prüfeinrichtung, die mit einem Rumpfkranz (10) mit Längs- und Umfangskrümmung verbunden ist, umfassend Mittel zum Anlegen von Kräften (60, 80) an den Rumpfkranz, **dadurch gekennzeichnet, dass** sie eine starre zentrale Welle (20), die sich in die Längsrichtung und in der Mitte des Rumpfkranzes (10) erstreckt, und Verbindungsmittel umfasst, die geeignet sind, die starre zentrale Welle mit dem Rumpfkranz (10) und mit Stützmitteln (70, 90) zu verbinden, und dass die Mittel zum Anlegen von Kräften (60, 80) an den Rumpfkranz auf den Stützmitteln (70, 90) montiert sind.

2. Prüfeinrichtung nach Anspruch 1, **dadurch gekennzeichnet, dass** sie Verbindungsmittel (30, 40) umfasst, die die starre zentrale Welle mit einem oberen Ende (10a) des Rumpfkranzes (10) verbinden, wobei die Mittel zum Anlegen von Kräften (60, 80) Kräfte auf ein unteres Ende (10b) des Rumpfkranzes ausüben.

3. Prüfvorrichtung nach einem der Ansprüche 1 oder 2, **dadurch gekennzeichnet, dass** die Stützmittel eine Grundplatte (70), die Mittel zum Anlegen von Torsionskräften (60) trägt, und einen Sockel (90) umfassen, der an der starren zentralen Welle (20) befestigt ist und Mittel zum Anlegen von Zug- oder Kompressionskräften (80) trägt.

4. Prüfvorrichtung nach Anspruch 3, **dadurch gekennzeichnet, dass** die Mittel zum Anlegen von Torsionskräften dazu geeignet sind, eine Tangentialkraft an die gekrümmte Fläche des Rumpfkranzes anzulegen.

5. Prüfeinrichtung nach Anspruch 4, **dadurch gekennzeichnet, dass** die Mittel zum Anlegen von Torsionskräften mindestens einen Zylinder umfassen, der dazu vorgesehen ist, eine Kraft entlang einer Horizontalachse anzulegen, und der an seinen Enden schwenkbar um eine Vertikalachse montiert ist.

6. Prüfeinrichtung nach Anspruch 2, **dadurch gekennzeichnet, dass** die Mittel zum Anlegen von Kräften (60, 80) mit dem Anlegepunkt der Kraft eines Lastübertragungsringes (50) verbunden sind, wobei das untere Ende (10b) des Rumpfkranzes (10) an dem Lastübertragungsring (50) befestigt ist.

7. Prüfeinrichtung nach einem der Ansprüche 2 oder 6, **dadurch gekennzeichnet, dass** die Verbindungsmittel einen Deckel (30) umfassen, der mit einem oberen Ende (27) der starren zentralen Welle (20) verbunden ist und Mittel zur Befestigung (40) des oberen Endes (10a) des Rumpfkranzes (10) umfasst.

8. Prüfeinrichtung nach Anspruch 7, **dadurch gekennzeichnet, dass** die Befestigungsmittel (40) von einem äußeren Ring (41) und einem inneren Ring (42) gebildet sind, die dazu vorgesehen sind, das obere Ende (10a) des Rumpfkranzes (10) durch Einspannen zu halten.

9. Prüfeinrichtung nach einem der Ansprüche 7 oder 8, **dadurch gekennzeichnet, dass** das obere Ende (27) der starren zentralen Welle (20) eine Reihe von Rillen (28) umfasst, die sich parallel zur Achse der starren zentralen Welle (20) erstrecken und sich in eine Reihe von komplementären Rillen (31) einfügen, die in einer Innenseite (30a) des Deckels (30) ausgenommen sind.

## Claims

1. Testing apparatus associated with a fuselage ring (10) having a longitudinal curvature and a circumferential curvature, comprising means (60, 80) for applying forces to said fuselage ring, **characterised in that** it comprises a rigid central shaft (20) extending in the longitudinal direction and at the centre of said fuselage ring (10), and securing means adapted to secure said rigid central shaft to said fuselage ring (10) and to support means (70, 90), and **in that** the means (60, 80) for applying forces to the fuselage ring are mounted on said support means (70, 90).

2. Testing apparatus according to claim 1, **characterised in that** it comprises securing means (30, 40) securing said rigid central shaft to an upper end (10a) of the fuselage ring (10), the force-application means (60, 80) applying forces to a lower end (10b) of the fuselage ring.

3. Testing apparatus according to either of claims 1 and 2, **characterised in that** said support means include a base plate (70) supporting means for applying torsion forces (60) and a footing (90) fixed to said rigid central shaft (20) and supporting means (80) for applying tensile or compressive forces.

4. Testing apparatus according to claim 3, **characterised in that** said means for applying torsion forces are adapted to applying a tangential force to the curved surface of said fuselage ring.

5. Testing apparatus according to claim 4, **characterised in that** said means for applying torsion forces include at least one jack capable of applying a stress along a horizontal axis and mounted pivotally at its ends around a vertical axis.

6. Testing apparatus according to claim 2, **characterised in that** the force-application means (60, 80) are secured at the point of application of said force to a load transfer ring (50), said lower end (10b) of the fuselage ring (10) being fixed to said load transfer ring (50).

7. Testing apparatus according to either of claims 2 and 6, **characterised in that** said securing means comprise a cover (30) secured to an upper end (27) of the rigid central shaft (20) and comprising means (40) for fixing the upper end (10a) of the fuselage ring (10).

8. Testing apparatus according to claim 7, **characterised in that** said fixing means (40) consist of an outer ring (41) and of an inner ring (42) which are adapted to retain the upper end (10a) of the fuselage ring (10) by clamping.

9. Testing apparatus according to either of claims 7 and 8, **characterised in that** the upper end (27) of the rigid central shaft (20) comprises a series of splines (28) extending parallel to the axis of the rigid central shaft (20) and fitting in a series of complementary splines (31) formed in an inner face (30a) of said cover (30).
